# EUROPEAN PATENT SPECIFICATION

(11) **EP 0 704 325 B1**
(45) Date of publication and mention of the grant of the patent: **24.10.2001**
(21) Application number: 95306786.5
(22) Date of filing: 26.09.1995
(51) Int. Cl.: B60C 23/00

(54) **Apparatus for alarming abnormality of tyre air pressure**
Alarmeinrichtung zur Feststellung von Abweichungen des Reifendrucks
Appareil d'alarme d'anomalies de la pression de l'air pneumatique

(30) Priority: 27.09.1994 JP 23162194
(43) Date of publication of application: 03.04.1996
(73) Proprietor: SUMITOMO RUBBER INDUSTRIES LIMITED, Kobe-shi, Hyogo-ken (JP); SUMITOMO ELECTRIC INDUSTRIES, LTD, Osaka-shi, Osaka-fu 541 (JP)
(72) Inventor: Horie, Hiroto, Akashi-shi, Hyogo-ken (JP)
(74) Representative: Stewart, Charles Geoffrey

(56) References cited:
- EP-A- 0 303 059
- EP-A- 0 489 562
- WO-A-93/25881
- WO-A-94/20317
- DE-A- 4 410 941
- JP-A- 1 190 506
- JP-A- 4 271 907
- US-A- 4 281 220
- US-A- 4 969 134
- Backfisch, K. P., Heinz, D. S.: "Das Reifenbuch"; Motorbuch Verlag Stuttgart (DE), 1st edition 1992, pages 119-121

## Description

The present invention relates to an apparatus for signalling or alarming abnormality of tyre air pressure, and more particularly to an apparatus for signalling abnormality of tyre air pressure capable of sending a plurality of information by changing an ON or OFF display pattern even with one lamp indicator to inform a driver of the various information.

It is desirable that a tyre's air pressure is essentially within a range which is set for the vehicle. However, air pressure drops due to puncture, damage to a valve or air leak through the inner liner, or the air pressure rises due to excessive load, weight or other cause. When a vehicle continues driving with the air pressure being low or high, the tyre may burst and cause an accident in a worst case. Thus, many apparatuses have been proposed which indicate abnormality of tyre air pressure.

For example, in Japanese Unexamined Patent Publication No JP-A-4-271907/1992, there is proposed a method wherein, in a vehicle equipped with four tyres, an alarm lamp is prepared for each tyre, and, when air pressure abnormality of a tyre is detected, a lamp lights up corresponding to that tyre's position. Moreover, in Japanese Unexamined Patent Publication No JP-A-1-190506/1989, there is proposed a method wherein only one alarm lamp lights up when the abnormality of inside pressure is detected for any one wheel.

If a vehicle is equipped with a centralised display mechanism (for example, a navigation monitor) capable of displaying a plurality of characters or patterns on one screen, a driver can easily recognise the contents of the alarm, even with a single alarm lamp, by displaying any information on that screen.

However, when the tyre's abnormality information is provided to a driver by means of an apparatus for alarming abnormality of tyre air pressure in a vehicle without such a centralised display mechanism, it is necessary to use a large display mechanism such as a lamp unit having lamps or sectors corresponding to all the positions and numbers of the tyres. Moreover, it is required to use a further display mechanism to indicate the failure of the apparatus.

However, the size of the combination meter display mechanism of a vehicle is limited, so that it is difficult to add such a large lamp unit in view of the existence of other warning lamps and meters.

Moreover, in the case of a regular passenger car, if four lamp units are installed to show the position of the tyres corresponding to four tyres, it is necessary to arrange the alarm so that it will not be mistaken with "unclosed door" warning lamp that is frequently activated.

Tyre deflation alarming systems are also known from "Das Reifenbuch"; Motorbuch Verlag Stuttgart, DE, 1^{st} edition, 1992, pages 119-121 and from WO-A-94/20317, however these systems employ at least two display mechanisms in issuing their alarms.

Finally German Patent DE-A-4410941 discloses an alarm system corresponding to the preamble of claim 1 and having in one alternative a single lamp as display mechanism capable of outputting a plurality of display patterns. In the system, the conditions at which the assessment of tyre pressure is made are first monitored. If the conditions are abnormal then a signal is given and only when normal does the system progress the signal as a pressure loss condition.

However none of the prior art systems provide an apparatus for signalling further information than that of abnormality of tyre air pressure including the position of the tyre showing the abnormal air pressure the further information including the type of failure by changing the display pattern of only one display lamp. It is an object of the present invention to do this.

According to the invention there is provided an apparatus for alarming abnormality of tyre air pressure, as set out in Claim 1.

Thus it is possible even with only one display mechanism to inform the driver of several kinds of information by causing the display mechanism capable of displaying only ON or OFF state to show a plurality of display patterns.

Further aspects of the invention will be apparent from the following description, by way of example only, in conjunction with the Figures in which:
Figure 1 shows one example of display patterns that a display mechanism in an apparatus for alarming abnormality of tyre air pressure of the present invention may display;
Figure 2 shows the position of a tyre corresponding to the display pattern in Figure 1;
Figure 3 shows another example of display patterns that a display mechanism in an apparatus for alarming abnormality of tyre air pressure of the present invention may display;
Figure 4 shows still another example of display patterns that a display mechanism in an apparatus for alarming abnormality of tyre air pressure of the present invention may display; and
Figure 5 shows yet another example of display patterns that a display mechanism in an apparatus for alarming abnormality of tyre air pressure of the present invention may display.

In the alarming apparatus of the present invention, it is possible to suitably adopt a detection mechanism that has been conventionally used as a detection mechanism capable of detecting air pressure abnormality of each tyre. That is, it is possible to use a mechanism in which the inside pressure, temperature or rate of vibration of a tyre is measured. The obtained measurement value signal is sent to the vehicle inside and calculated to detect abnormality of tyre air pressure, or a mechanism in which abnormality of tyre air pressure is indirectly detected from the tyre's angular velocity signal may be utilised.

Such systems use a mechanism giving visual or aural signals such as a lamp or a buzzer. The contents of the information to be informed to a driver by the display mechanism might be the presence of abnormality of tyre air pressure and the position where the air pressure abnormality has occurred, the presence of failure in the detection mechanism or display mechanism and the type of failure, the state of calibration (an operation to return the evaluation value to zero with which abnormality of tyre's inside air pressure is detected, when the tyre's inside air pressure is adjusted to the prescribed value for the vehicle), as well as failure inside the microcomputer, failure in the switch, or failure in the input of wheel speed for devices using wheel speed signals.

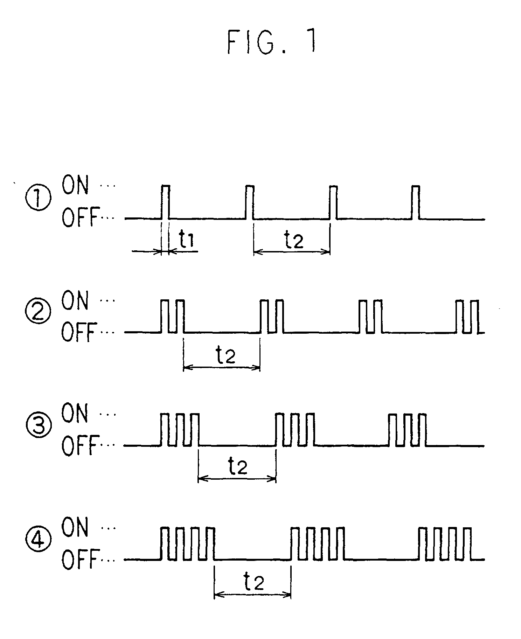

Examples of specific display patterns will now be explained based on Figures 1 to 4.

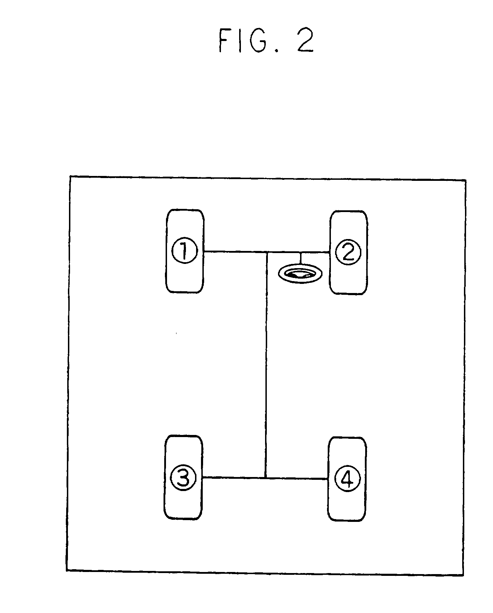

Figure 1 shows display patterns informing of the position of a tyre where abnormality of tyre air pressure has occurred, and Figure 2 shows the position of the tyre corresponding to the display pattern. In Figure 1, the rising time t1 of blinking is about 0.2 sec and the maximum 4 times of blinking are performed at an interval of about 0.4 seconds in a regular passenger car with four tyres. To recognise the number of blinks without being mistaken, it is desirable that the interval between the final rising and next first rising is about 2 secs. Moreover, t1 and t2 are not limited to the value stated above, and it is possible to suitably select t1 between 0.1 and 0.6 sec and t2 between 1 and 4 secs.

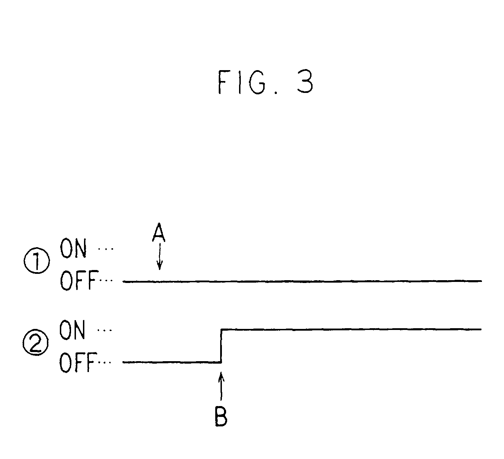

Figure 3 shows one example of display patterns informing of failure in the display mechanism or detection mechanism.

For example, the pattern remains OFF if the display mechanism fails even if the display mechanism is turned on at point A (refer to ① in Figure 3). Moreover, when other mechanisms such as a detection mechanism fail, the ON state is maintained from point B where the failure is detected (refer to ② in Figure 3). Thus, it is possible to verify at a glance whether the display mechanism failed, or the detection mechanism or the like failed.

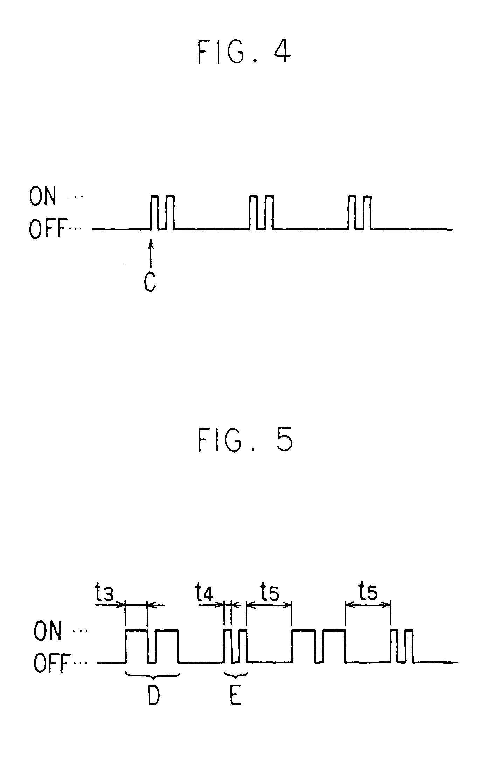

Figure 4 shows one example of display patterns informing of the state of calibration for monitoring systems which require calibration.

It is assumed that the calibration starts at the point C, a constant display pattern (twice blinking in Figure 4) is continued to show the state of calibration, and the display pattern changes (for example, OFF state is maintained) to show the end of the calibration.

Figure 5 shows one example of display patterns in which two patterns with different rising times are combined.

For example it is desirable that the rising time t3 of the pulse constituting the section D is 1 sec, the rising time t4 of the pulse constituting the section E is 0.2 sec, and the interval t5 is 2 secs in order to allow the display pattern to be clearly recognised.

Moreover, for example, section D shows the start code indicating the head of the arrays of contents of failures when plural failures have occurred, and the number of pulses in the section E shows the number corresponding to the kind of failure.

The alarming apparatus of the present invention further increases the quantity of information to be displayed by a switching mechanism such as a pushbutton type switch in addition to the display patterns.

For examples, it is possible for a driver to know in which tyre the abnormality occurred by observing the display pattern in Figure 1. Thereafter, operating the switching mechanism displays a further display pattern indicating the degree of air pressure abnormality to judge whether the driver should immediately stop driving or may go on to a replacement station such as a gasoline station.

The alarming apparatus of the present invention is capable of informing of the abnormality alarm, failure, or state of calibration with one display mechanism. Therefore, it is possible to reduce the occupied area of the combination meter display section in a vehicle, with a reduced cost.

## Claims

1. An apparatus for alarming abnormality of tyre air pressure for a vehicle, comprising a detection mechanism capable of detecting air pressure abnormality of each tyre, a display mechanism having a single lamp or single buzzer capable of displaying only ON and OFF states, and a switching mechanism connected to the display mechanism, the display mechanism being capable of outputting a plurality of display patterns to inform of plural kinds of information with the display patterns, **characterised in that** the apparatus is so designed that, when the switching mechanism is entered after the display mechanism has once given an alarm informing of abnormality, the display mechanism switches the display pattern to inform of further information.

## Patentansprüche

1. Vorrichtung zum Warnen vor einer Abweichung eines Reifenluftdrucks für ein Fahrzeug, umfassend einen Detektionsmechanismus, der eine Luftdruckabweichung jedes Reifens detektieren kann, einen Anzeigemechanismus mit einer einzigen Lampe oder einem einzigen Summer, der nur EIN- und AUS-Zustände anzeigen kann, und einen mit dem Anzeigemechanismus verbundenen Schaltmechanismus, wobei der Anzeigemechanismus eine Vielzahl von Anzeigemustern ausgeben kann, um mit den Anzeigemustern über viele Arten von Information zu unterrichten, **dadurch gekennzeichnet, daß** die Vorrichtung derart entworfen ist, daß, wenn der Schaltmechanismus betätigt wird, nachdem der Anzeigemechanismus einmal eine Warnung ausgegeben hat, die über eine Abweichung informiert, der Anzeigemechanismus das Anzeigemuster umschaltet, um über weitere Informationen zu unterrichten.

## Revendications

1. Appareil destiné à donner une alarme en cas d'anomalie de la pression d'air d'un pneumatique de véhicule, comprenant un mécanisme de détection capable de détecter une anomalie de la pression de l'air de chaque pneumatique, un mécanisme d'affichage ayant une lampe unique ou un ronfleur unique capable d'afficher uniquement des états de présence et d'absence, et un mécanisme de commutation connecté au mécanisme d'affichage, le mécanisme d'affichage pouvant transmettre plusieurs motifs d'affichage pour donner une information relative à plusieurs types d'informations avec les motifs d'affichage, **caractérisé en ce que** l'appareil est réalisé de manière que, lorsque le mécanisme de commutation est utilisé après que le mécanisme d'affichage a déjà donné une alarme indiquant une anomalie, le mécanisme d'affichage commute le motif d'affichage pour donner d'autres informations.
